# EUROPÄISCHE PATENTSCHRIFT

(11) **EP 1 619 416 B1**
(45) Veröffentlichungstag und Bekanntmachung des Hinweises auf die Patenterteilung: **19.11.2008**
(21) Anmeldenummer: 04017267.8
(22) Anmeldetag: 22.07.2004
(51) Int. Cl.: F16H 55/14

(54) **Verbundhohlrad**
Compound ring gear
Couronne composite

(43) Veröffentlichungstag der Anmeldung: 25.01.2006
(73) Patentinhaber: Eickhoff Maschinenfabrik GmbH, 44789 Bochum (DE)
(72) Erfinder: Aust, Rainer, 44879 Bochum (DE); Wittor, Ralf G., 44649 Herne (DE)
(74) Vertreter: Schneiders, Josef

(56) Entgegenhaltungen:
- US-A- 1 852 789
- US-A1- 2003 161 562
- PATENT ABSTRACTS OF JAPAN Bd. 0174, Nr. 07 (M-1454), 29. Juli 1993 (1993-07-29) & JP 5 079450 A (MITSUBISHI HEAVY IND LTD), 30. März 1993 (1993-03-30)
- O'ROURKE R ET AL: "CAST IRON: A SOLID CHOICE FOR REDUCING GEAR NOISE" GEAR TECHNOLOGY, RANDALL PUBLISHING CO. ELK GROVE, ILLINOIS, US, Bd. 16, Nr. 5, September 1999 (1999-09), Seiten 46-49, XP000876077 ISSN: 0743-6858

## Beschreibung

Die vorliegende Erfindung betrifft ein Verbundhohlrad mit einem innenverzahnten Hohlrad, mit einer Bandage, welche das Hohlrad auf seinem Außenumfang umschließt und mit einer mechanischen Schnittstelle, über welche das Verbundhohlrad an einem Getriebeglied festsetzbar ist. Ein Verbundhohlrad gleicher Gattung ist aus der US 4 503 719 bekannt.

Ferner betrifft die Erfindung ein Verfahren zur Herstellung eines solchen Verbundhohlrades, ein Rädergetriebe, in welches ein solches Verbundhohlrad eingesetzt ist sowie bevorzugte Verwendungszwecke des Verbundhohlrades bzw. des Rädergetriebes.

Bei dem Betrieb von Rädergetrieben verursacht der Zahneingriff zwischen den Rädern Körperschall, welcher über das Gehäuse in die Umgebung abgestrahlt wird. Grundsätzlich beschäftigt sich die vorliegende Erfindung damit, die Körperschallemission, die von Hohlrädern ausgeht, zu reduzieren.

Die US 4 503 719 betrifft einen Anlasser für einen Motor eines Kraftfahrzeuges, der über ein Planetengetriebe verfügt. Das Planetengetriebe umfasst seinerseits ein innenverzahntes Hohlrad, welches auf seinem Außenumfang von einer Bandage umschlossen ist. Bandage und Hohlrad bilden zusammen ein Verbundhohlrad. Zwischen dem Hohlrad und der Bandage sind elastische Dämpfungselemente eingesetzt, um das schlagartig auftretende Reaktionsmoment beim Starten abzudämpfen. Das Reaktionsmoment wird über eine mechanische Schnittstelle, die an der Bandage angeordnet ist, aus dem Verbundhohlrad abgeleitet.

Die EP 0 588 769 M1 betrifft ein Planetengetriebe für einen Getriebemotor, bei welchem die Eingriffskräfte zwischen den Rädern in besonderer Weise ausgerichtet sind. Diese Maßnahme soll dazu dienen, dass Laufgeräusch zu verringern und die Belastbarkeit der Verzahnungen zu erhöhen. Das Planetengetriebe umfasst ein Hohlrad, welches sich in einer rohrförmigen Aufnahme befindet, die einer Bandage ähnelt. Reaktionsmomente werden von dem Hohlrad über die rohrförmige Aufnahme in das Gestell des Getriebemotors abgeleitet.

Aus der JP-A-5-079450 ist ein Rädergetriebe mit der Merkmalen des Oberbegriffes des Anspruchs 1 und ein Verfahren mit der Merkmalen des Oberbegriffes des Anspruchs 6 bekannt.

Die im Stand der Technik vorbekannten Maßnahmen zur Reduzierung der Körperschallabstrahlung von Hohlrädern sind nicht geeignet, in besonders geräuschkritischen Anwendungen wie beispielsweise im Windkraftbereich eingesetzt zu werden.

Der vorliegenden Erfindung liegt daher die Aufgabe zugrunde, ein Verbundhohlrad anzugeben, welches über ein besonders hohes Dämpfungsvermögen gegenüber dem im Zahneingriff entstehenden Körperschall aufweist.

Dies gelingt durch ein Verbundhohlrad der eingangs genannten Art, bei dem die mechanische Schnittstelle an dem Hohlrad angeordnet ist.

Ein Grundgedanke der vorliegenden Erfindung besteht darin, das Hohlrad an seiner Außenseite mit einer Bandage zu versehen, die durch ihre hohe Masse ein hohes Dämpfungsvermögen aufweist. Erfindungswesentlich ist, dass die Bandage aus dem getriebeinternen Kraftfluss ausgegliedert sein muss. Das bedeutet, dass die Zahnkräfte, die auf das Hohlrad einwirken, direkt von dem Hohlrad in das angrenzende Getriebeglied abgeleitet werden.

Hohlrad und Bandage werden über einen Presssitz miteinander verspannt. In dieser Konstellation entsteht in der Trennfuge zwischen Hohlrad und Bandage eine Mikroreibung, welche die Körperschallenergie wirksam aufzehrt. Das Entstehen der Mikroreibung ist dadurch zu erklären, dass das Hohlrad gegenüber der steifen, runden Bandage polygonal verzerrt wird. Das Verzerren des Hohlrades wird durch die Zahnkräfte verursacht. Beim Betrieb des Getriebes treffen somit in der Trennfuge die zylindrische Innenwand der Bandage und die polygonale Außenwand des Hohlrades aufeinander.

Das Hohlrad wird vorteilhafter Weise aus Stahl oder aus bainitischem Guss hergestellt.

Als Werkstoff für die Bandage eignen sich bevorzugt Eisenwerkstoffe, wie beispielsweise Grauguss oder Kugelgraphitguss. Eisenguss weist ein hohes Dämpfungsvermögen auf und ist daher der Geräuschdämpfung zuträglich.

Die Emission von Luftschall aus der Bandage kann wirksam dadurch verringert werden, dass auf der Außenseite der Bandage Rippen angeordnet werden; durch diese Maßnahme wird zudem Steifigkeit erhöht und die Wärmeabfuhr verbessert.

Sofern eine Bandage aus Eisenguss vorgesehen wird, empfiehlt sich die Herstellung des Verbundhohlrades nach einem Verfahren mit den folgenden Schritten:
a.) Gießen der Bandage,
b.) Fertigen eines unverzahnten Hohlradrohlings;
c.) Einschrumpfen des Hohlradrohlings in die Bandage;
d.) Verzahnen des Hohlradrohlings.

Es hat sich nämlich gezeigt, dass ein fertig bearbeitetes Hohlrad nicht in die Bandage eingeschrumpft werden sollte, da durch den Fügevorgang geometrische Abweichungen in der bereits erzeugten Verzahnungsgeometrie entstehen können. Der Hohlradrohling wird vorzugsweise geschmiedet oder aus bainitischem Gusseisen hergestellt. Das Verzahnen erfolgt auf bekannten, spanenden Verzahnungsmaschinen.

Das erfindungsgemäße Verbundhohlrad wird bevorzugt als stehendes Hohlrad in Rädergetriebe und insbesondere in Umlaufrädergetriebe eingesetzt. Es ist darauf zu achten, dass die Bandage nicht mit dem Gehäuse des Rädergetriebes kraft- und/oder formschlüssig verbunden ist.

Das erfindungsgemäße Verbundhohlrad bzw. ein Rädergetriebe, welches mit dem Verbundhohlrad ausgerüstet ist, wird bevorzugt in einer Windkraftanlage eingesetzt. Windkraftgetriebe müssen eine hohe Leistungsdichte aufweisen und dabei besonders geräuscharm sein. Andere geräuschkritische Anwendungsbereiche sind denkbar.

Ein Ausführungsbeispiel des erfindungsgemäßen Verbundhohlrades soll nun anhand von einer Zeichnung dargestellt werden. Es zeigen hierfür:

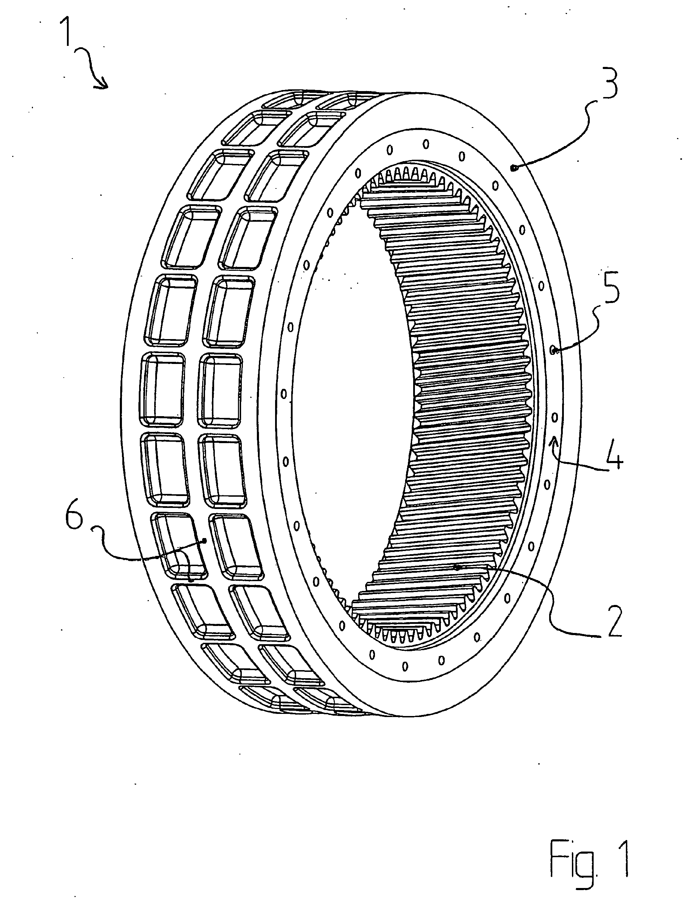

- Fig. 1:: Verbundhohlrad, geschlossen;

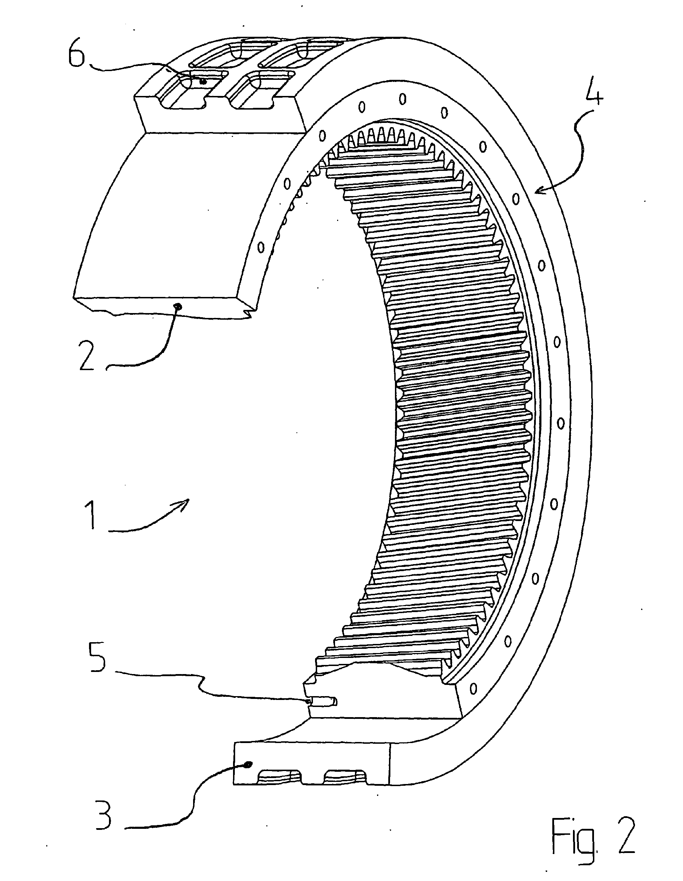

- Fig. 2:: Verbundhohlrad, aufgebrochen.

Das Verbundhohlrad ist in seiner Gesamtheit mit der Bezugsziffer 1 bezeichnet. Es setzt sich aus zwei Komponenten zusammen, einem innenverzahnten Hohlrad 2 und einer Bandage 3, welche das Hohlrad 2 auf seinem Außenumfang umschließt.

An seiner Flanke ist das Hohlrad 2 mit einer mechanischen Schnittstelle 4 in der Gestalt eines Gewindelochkreises 5 ausgerüstet. Über diese mechanische Schnittstelle 4 kann das Verbundhohlrad 1 an benachbarte Getriebeglieder festgesetzt werden. Das Verbundhohlrad 1 kann bewegt oder feststehend sein. Sofern es unbewegt ist, wäre es über die mechanische Schnittstelle 4 an dem hier nicht dargestellten Gehäuse eines Getriebes festgesetzt.

Die Bandage 3 besteht aus einem Eisengusswerkstoff, das Hohlrad 2 aus Stahl oder aus bainitischem Gusseisen. An ihrer Außenseite ist die Bandage 3 mit einer Mehrzahl Rippen 6 versehen. Es handelt sich hierbei um Versteifungsrippen, die etwa rechteckige Einsenkungen in der Peripherie der Bandage 3 ausbilden.

## Patentansprüche

1. Rädergetriebe, insbesondere Umlaufrädergetriebe, mit einem unbewegten Gehäuse, einem an dem Gehäuse festgesetzten, innenverzahnten Hohlrad (2) und einer Bandage (3), welche das Hohlrad (2) an seinem Außenumfang umschließt,
**dadurch gekennzeichnet dass** die Bandage (3) mit dem Gehäuse nicht kraft- und/oder formschlüssig verbunden ist.

2. Rädergetriebe nach Anspruch 1, **dadurch gekennzeichnet, dass** das Hohlrad (2) aus Stahl und die Bandage (3) aus Eisenguss, wie beispielsweise Grauguss oder Kugelgraphitguss, gefertigt ist.

3. Rädergetriebe nach Anspruch 1, **dadurch gekennzeichnet, dass** das Hohlrad (2) aus bainitischem Gusseisen und die Bandage (3) aus Eisenguss, wie beispielsweise Grauguss oder Kugelgraphitguss, gefertigt ist.

4. Rädergetriebe nach einem der Ansprüche 1 bis 3, **gekennzeichnet durch** Rippen (6) auf der Außenseite der Bandage (3).

5. Verfahren zur Herstellung eines Verbundhohlrades (1) mit einem innenverzahnten Hohlrad (2), mit einer Bandage (3), welche das Hohlrad (2) auf seinem Außenumfang umschließt und mit einer an dem Hohlrad (1) angeordneten mechanischen Schnittstelle (4), über welche das Verbundhohlrad (1) an einem Getriebeglied eines Rädergetriebes nach einem der Ansprüche 1 bis 4 festsetzbar ist,
**gekennzeichnet durch** die folgenden Schritte:
a) Gießen der Bandage (3);
b) Fertigen eines unverzahnten Hohlradrohlings, beispielsweise **durch** Schmieden oder **durch** Gießen;
c) Einschrumpfen des Hohlradrohlings in die Bandage (3);
d) Verzahnen des Hohlradrohlings.

## Claims

1. A wheel gear, in particular an epicyclic gear, having an immobile housing, an inwardly toothed ring gear (2) which is fixed to the housing, and a rim (3) which encloses the outer periphery of the ring gear (2),
**characterised in that** the rim (3) is not connected to the housing either in a non-positive and/or positive way.

2. A wheel gear according to Claim 1, **characterised in that** the ring gear (2) is made of steel, and the rim (3) is made of cast iron, such as, for example, gray cast iron or nodular graphite cast iron.

3. A wheel gear according to Claim 1, **characterised in that** the ring gear (2) is made of bainite cast iron, and the rim (3) is made of cast iron, such as, for example, gray cast iron or nodular graphite cast iron.

4. A wheel gear according to one of Claims 1 to 3, **characterised by** ribs (6) on the outside of the rim (3).

5. A method for the manufacture of a composite ring gear (1) having an inwardly toothed ring gear (2), having a rim (3) which encloses the outer periphery of the ring gear (2), and having, arranged on the ring gear (1), a mechanical interface (4) via which the composite ring gear (1) is able to be fixed to a gear member of a wheel gear according to one of Claims 1 to 4,
**characterised by** the following steps:
a) casting of the rim (3);
b) manufacturing of an untoothed ring gear blank, for example by forging or by casting;
c) shrinking of the ring gear blank into the rim (3);
d) toothing of the ring gear blank.

## Revendications

1. Train d'engrenages, en particulier engrenages planétaires, avec un boîtier non mobile, une roue creuse (2) à denture intérieure, fixée au boîtier, et un bandage (3) qui entoure la roue creuse (2) à son pourtour extérieur,
**caractérisé en ce que** le bandage (3) n'est pas relié par force et/ou par concordance des formes au boîtier.

2. Train d'engrenages selon la revendication 1, **caractérisé en ce que** la roue creuse (2) est fabriquée en acier et le bandage (3) en fonte de moulage, comme par exemple en fonte grise ou en fonte de graphite sphéroïdal.

3. Train d'engrenages selon la revendication 1, **caractérisé en ce que** la roue creuse (2) est fabriquée en fonte bainitique et le bandage (3) en fonte de moulage, comme par exemple en fonte grise ou en fonte de graphite sphéroïdal.

4. Train d'engrenages selon l'une des revendications 1 à 3, **caractérisé par** des nervures (6) au côté extérieur du bandage (3).

5. Procédé de fabrication d'une roue creuse composite (1) avec une roue creuse (2) à denture intérieure, avec un bandage (3) qui entoure la roue creuse (2) sur son pourtour extérieur et avec une interface mécanique (4) disposée à la roue creuse (1) par laquelle la roue creuse composite (1) peut être fixée à un élément d'engrenage d'un train d'engrenages selon l'une des revendications 1 à 4,
**caractérisé par** les étapes consistant à:
a) couler le bandage (3);
b) fabriquer une ébauche de roue creuse non dentée, par exemple par forgeage ou par coulage;
c) fretter l'ébauche de roue creuse dans le bandage (3) ;
d) denter l'ébauche de roue creuse.
